Europäisches Patentamt

European Patent Office

Office européen des brevets

(11) Numéro de publication : **0 364 316 B1**

# (12) FASCICULE DE BREVET EUROPEEN

(45) Date de publication du fascicule du brevet :
**16.06.93 Bulletin 93/24**

(51) Int. Cl.$^5$ : **C09D 127/16,**
// **(C09D127/16, 133:06)**

(21) Numéro de dépôt : **89402517.0**

(22) Date de dépôt : **14.09.89**

(54) **Enduit ou revêtement de surfaces, son procédé de préparation et d'application surfaces revêtues d'un tel enduit.**

(30) Priorité : **29.09.88 FR 8812754**

(43) Date de publication de la demande :
**18.04.90 Bulletin 90/16**

(45) Mention de la délivrance du brevet :
**16.06.93 Bulletin 93/24**

(84) Etats contractants désignés :
**AT BE CH DE ES FR GB GR IT LI LU NL SE**

(56) Documents cités :
**DE-A- 3 218 502
GB-A- 2 127 029
US-A- 3 053 818
US-A- 4 581 412**

(73) Titulaire : **ELF ATOCHEM S.A.
4 & 8, Cours Michelet La Défense 10
F-92800 Puteaux (FR)**

(72) Inventeur : **Kappler, Patrick
20, Allée Simon Saint-Jean
F-69130 Ecully (FR)**
Inventeur : **Perillon, Jean-Luc
18 Lot Bois Taillefer
F-27300 Bernay (FR)**

(74) Mandataire : **Foiret, Claude et al
ELF ATOCHEM S.A. Département Propriété
Industrielle La Défense 10 - Cedex 42
F-92091 Paris-La-Défense (FR)**

## Description

La présente invention a pour objet des enduits de surface à base de terpolymère fluoré et de résine acrylique.

Les (co)polymères fluorés entrent souvent dans des compositions d'enduits et de peinture pour surfaces diverses : substrats métalliques, en matière plastique, en bois... en raison notamment de leurs bonnes propriétés mécaniques, de leur imperméabilité aux gaz et aux liquides, de leur excellente stabilité thermique.

Dans le brevet américain publié sous le numéro US 2.468.054, on a décrit la copolymérisation de fluorure de vinylidène avec le tétrafluoroéthylène ou avec un mélange de tétrafluoroéthylène et d'un autre éthylène halogéné pour produire des polymères tenaces, stables à la chaleur, qui sont utiles comme matériaux de revêtement et d'isolation.

Toutefois ces copolymères fluorés présentent certains inconvénients : ils n'adhèrent pas bien à la plupart des substrats.

Dans le brevet français publié sous le numéro FR 1.401.599 et le brevet américain publié sous le numéro US 3.451.971, on a proposé des copolymères dérivés de fluorure de vinylidène, de tétrafluoroéthylène et d'un ester monovinylique ; ils sont utilisables comme matériaux de revêtement et d'isolation sous forme de solution dans le diméthylformamide.

Dans le brevet américain publié sous le numéro US 4.128.519, on a décrit une dispersion aqueuse contenant -un homo- ou un copolymère de fluorure de vinylidène avec éventuellement du tétrafluoroéthylène et de l'hexafluoropropène - une résine époxyde émulsifiée, - un agent émulsifiant de ladite résine. Cette dispersion aqueuse peut être utilisée comme couche de finition pour le revêtement de substrats divers préalablement enduits à l'aide d'un primaire d'adhérence.

Mais aucune des compositions précédemment citées ne réunit simultanément les propriétés de brillance, d'adhérence, de dureté ainsi qu'une grande facilité de mise en oeuvre.

L'enduit ou revêtement de surface mis au point par la demanderesse présente à la fois :
- une adhérence excellente
- une dureté importante
- une brillance de bonne qualité.

Il est à base d'un ou plusieurs terpolymères fluorés constitués (en moles) de :
- 70 à 85 % de motifs dérivés de fluorure de vinylidène,
- 10 à 25 % de motifs dérivés de tétrafluoroéthylène,
- 3 à 9 % de motifs dérivés de chlorotrifluoroéthylène, et de résine(s) acrylique(s).

Le terpolymère fluoré avantageusement préféré est tel que la viscosité dynamique d'une solution de 25 % en poids de terpolymère dans un mélange 2/1 en poids cyclohexanone/acétone soit inférieure ou égale à 1 Pa.s.

Les terpolymères fluorés conformes à l'invention peuvent être obtenus par copolymérisation des monomères de fluorure de vinylidène, de tétrafluoroéthylène et de trifluorochloroéthylène selon un procédé de type émulsion, suspension...

La température de polymérisation est en général comprise entre 0 et 150°C et de préférence entre 15 et 90°C.

En général, on introduit les différents monomères dans une proportion qui est approximativement celle des proportions du copolymère final désiré. Lorsque la copolymérisation est effectuée en émulsion ou en suspension, le milieu de polymérisaiton peut être constitué par de l'eau ou par un mélange eau/solvant chlorofluoré (par exemple trichlorotrifluoroéthane).

La pression de copolymérisation est en général inférieure à 50 bars et de préférence inférieure à 25 bars.

Quel que soit le procédé de copolymérisation on utilise un limitateur de chaîne afin d'ajuster la masse moléculaire du terpolymère fluoré. A titre d'exemple de limitateur de chaîne, on peut citer le chloroforme, le tétrachlorure de carbone, l'acétate d'éthyle.

Dans le cas d'un procédé de type émulsion, la copolymérisation s'effectue en présence d'un émulsifiant de formule générale :

$$CF_3 -(CF_2)_n - COO\ M$$

ou

$$CF_3 -(CF_2)_m - C_2H_4\ M$$

avec

. M qui peut être $Na^+$, $K^+$, $NH_4^+$
. $6 \leq n \leq 12$
  et
. $4 \leq m \leq 10$

La réaction de copolymérisation peut être amorcée par un amorceur générateur de radicaux solubles dans l'eau. Les amorceurs couramment utilisés sont des persulfates de sodium, potassium ou ammonium, associés ou non à un agent réducteur selon la température de copolymérisation.

Dans le cas d'un procédé de type suspension, la copolymérisation s'effectue en présence d'un colloïde protecteur de type alcool polyvinylique, dérivé cellulosique.

Pour amorcer la polymérisation, on peut utiliser un initiateur de polymérisation qui peut être avantageusement un peroxydicarbonate comme le peroxydicarbonate d'isopropyle, un perpivalate comme le perpivalate de tertiobutyle ou de tertioamyle.

Une fois la polymérisation terminée, on élimine le ou les monomères n'ayant pas réagi puis on sèche sous vide le terpolymère obtenu pendant 48 h à 70°C.

Il est alors prêt à être mis sous forme d'enduit conforme à l'invention.

L'expression "résine acrylique" désigne le produit résultant de la polymérisation ou copolymérisation d'un ou plusieurs (meth)acrylates d'alkyle ayant de préférence 1 à 12 atomes de carbone dans le groupement alkyle du monomère.

A titre d'illustration de tels monomères, on peut citer notamment les esters d'alkyle des acides acrylique et méthacrylique dans lesquels le groupement alkyle dérive d'un alcool aliphatique et est notamment un groupement méthyle, éthyle, butyle, isobutyle, hexyle, heptyle, octyle, isooctyle, éthyl-2 hexyle.

L'expression "résine acrylique" s'étend aussi au produit résultant de la copolymérisation d'un ou plusieurs des monomères précités avec un monomère polymérisable portant ou non un groupement fonctionnel. A titre d'illustration de tels monomères, on peut citer les hydrocarbures aliphatiques ou aromatiques portant au moins une double liaison oléfinique, tel que notamment le styrène, les acides mono- et di-carboxyliques porteurs d'une double liaison oléfinique tels que les acides (meth)acryliques, crotonique, maléïque, itaconique, fumarique ; les esters vinyliques renfermant généralement 5 à 15 atomes de carbone tels que les esters vinyliques d'acides versatiques ; les composés à groupement fonctionnel hydroxyle, tel que le (meth)acrylate d'hydroxy-2 éthyle, le (meth)acrylate d'hydroxy-2 propyle, le (meth)acrylate de méthyl-1 hydroxy-2 éthyle ; les composés à groupement époxy tels que le (meth)acrylate de glycidyle ; le N-méthylol(meth)acrylamide ; les composés à groupement amino tels que le (meth)acrylate de N,N-diméthylaminoéthyle, le (meth)acrylate de N-tertiobutylaminoéthyle, le (meth)acrylate de N-tertiobutylaminobutyle.

Les résines acryliques conformes à l'invention peuvent indifféremment être thermoplastiques ou thermodurcissables.

A titre d'exemple de résine acrylique thermoplastique, on peut citer les résines obtenues à partir de méthacrylate de méthyle et d'acrylate d'éthyle.

A titre d'exemple de résine acrylique thermodurcissable, on peut citer une résine obtenue à partir de 60 % (en poids) de méthacrylate de méthyle, 18 % de méthacrylate d'hydroxyéthyle, 2 % d'acide méthacrylique et 20 % d'acrylate de butyle.

L'enduit ou revêtement de surface mis au point par la demanderessepeut également contenir :
- une ou plusieurs résines durcisseuses en solution qui peut être de type amine ou de type isocyanate,
- un ou plusieurs solvants qui peuvent être nécessaires pour ajuster la viscosité de l'enduit,
- des pigments ou colorants,
- des additifs divers tels que charges, agents mouillants, anti-oxydants, fongicides, agents anti-sédimentation, agents épaississants.... .

Le rapport pondéral du ou des terpolymères fluorés à la somme de toutes les résines entrant dans la composition de l'enduit de surface conforme à l'invention est avantageusement compris entre 30 et 90 % et de préférence entre 50 et 70 %.

Par résine durcisseuse de type amine, on entend le produit de la condensation du formaldéhyde avec des composés ayant au moins 2 groupements amines tels que l'urée, la mélamine, la benzoguanamine, le glycoluril. Ces produits de condensation sont en général alkylés et peuvent être partiellemnt polymérisés.

Par résine durcisseuse de type isocyanate on entend un composé monomère, prépolymère ou polymère contenant au moins 2 groupements isocyanates libres ou bloqués.

L'expression "groupement isocyanate bloqué" désigne un groupement qu'une activation thermique régénère en groupement isocyanate libre.

A titre d'exemple, on peut citer pour les isocyanates libres l'isophorone diisocyanate, le toluène diisocyanate, l'hexaméthylène diisocyanate ; pour les isocyanates bloqués, le produit de condensation des précédents avec le caprolactame, le phénol...

En général la ou les résines durcisseuses sont introduites dans la composition de l'enduit en quantités sensiblement stoechiométriques, quoiqu'un excès de résines durcisseuses supérieur de 10 % à la stoechiométrie convienne.

Les pigments utilisés peuvent être de matière et de composition diverses. En général on préfère des pigments qui présentent une bonne résistance chimique et une stabilité aux intempéries importante et durable.

A titre d'exemple de pigments préférés, on peut citer le dioxyde de titane, le noir de carbone, le bleu de phtalocyanine, l'oxyde de chrome, les oxydes de fer jaune, rouge.

La quantité de pigment(s) utilisée est très variable et dépend du coloris et de l'intensité recherchés.

Le ou les solvants utilisés afin d'ajuster la viscosité de l'enduit peuvent être choisis parmi le diméthylformamide, le diméthylacétamide, le diméthylsulfoxyde, les esters, les cétones, les composés aromatiques, les alcools, seuls ou en mélange.

A titre d'exemple de solvant avantageusement préféré pour des enduits contenant des résines durcisseuses ayant des groupements isocyanates libres, on peut citer un mélange 2/1 (en poids) cyclohexanone/acétone.

Dans le cas où l'enduit ne contient pas de résines durcisseuses ayant des groupements isocyanates libres, on choisit avantageusement comme solvant, un mélange 50/45/5 (en poids) de méthyléthylcétone/xylène/éthoxypropanol.

L'invention concerne également l'utilisation d'une composition telle que définie précédemment pour le revêtement ou l'enduction de substrats divers.

La composition selon l'invention peut être préparée par dissolution d'une partie au moins de la ou des résines acryliques dans un ou plusieurs solvants, éventuellement en présence du ou des pigments, d'agents mouillants.

On ajoute ensuite le ou les terpolymères fluorés, éventuellement divers additifs, le reste de la ou des résines acryliques ainsi que la ou les résines durcisseuses.

L'enduit ou revêtement ainsi préparé est apte à être appliqué selon les techniques habituelles (brosse, pistolet, rouleaux applicateurs, trempé...) sur des supports ou substrats variés :
- substrats métalliques, par exemple aluminium, acier ordinaire, acier galvanisé,
- matières plastiques,
- bois.....

L'enduit déposé sur le substrat forme un film humide que l'on sèche par évaporation du ou des solvants et/ou par réticulation chimique.

Les opérations de séchage du film peuvent s'effectuer à température ambiante ou dans une étuve.

Une fois, l'enduit ou revêtement sec, on peut évaluer ses propriétés mécaniques, la qualité de son adhérence au substrat et son brillant.

N.B : Pour tous les exemples ci-après, la masse indiquée pour les composés en solution ou en suspension (résine acrylique, terpolymère fluoré, résine durcisseuse) correspond à la masse totale de la solution contenant ledit composé.

## EXEMPLE 1

## A - PREPARATION DE L'ENDUIT

On prépare l'enduit en mélangeant les constituants de la manière indiquée plus haut c'est-à-dire en effectuant la dispersion d'au moins une partie de résine(s) acrylique(s) du ou des pigments dans un ou plusieurs solvants.

On opère dans un disperseur à billes.

Une fois la dispersion effectuée on ajoute le complément de l'enduit qui consiste en le ou les terpolymères fluorés, éventuellement le reste de résine(s) acrylique(s), des résines durcisseuses et on mélange intimement les constituants.

## B- CONSTITUANTS DE L'ENDUIT

**1°) Dispersion**

L'enduit commprend (en grammes) :

- résine acrylique thermodurcissable (méthacrylate de méthyle, méthacrylate d'hydroxyéthyle, acide méthacrylique,

acrylate de butyle 60/18/2/20 (en poids), $\overline{Mn}$ = 2800 et $\overline{Mw}$ = 10600)

en solution dans la méthylisobutylcétone

(concentration : 70 % en poids)                89

– dioxyde de titane                131

– cyclohexanone/acétone/diméthylformamide                31

(respectivement en poids : 66/17/17)

   2°) Complément

– copolymère fluoré en solution dans un mélange

2/1 (en poids) cyclohexanone/acétone

(concentration : 25 % en poids)                733

– composé d'isocyanate à base d'hexaméthylène diisocyanate                16

Les caractéristiques des copolymères fluorés utilisés sont indiquées dans le Tableau I (EXEMPLES 1.a à 1.1.).

Le rapport pondéral du polymère fluoré à l'ensemble des résines est égal à 70 %.

C - MISE EN OEUVRE DE L'ENDUIT

L'enduit préparé selon A est appliqué à la barre de 100μm sur une plaque d'aluminium traité bonderite 720 L.

On laisse sécher le film pendant 15 jours à température ambiante et on mesure l'épaisseur du film sec qui est de 18 μm.

On évalue les propriétés du film obtenu et en particulier on teste :
- le brillant spéculaire à 60° mesuré selon la norme NFT 30064,
- l'adhérence mesurée selon la norme NFT 30038,
- la dureté crayon mesurée selon la norme ASTM D 3363-74.

Les résultats des mesures sont réunis dans le tableau I.

EXEMPLE 2

On renouvelle l'essai de l'EXEMPLE 1 avec un enduit qui comprend (en grammes) :

   1°) Dispersion

– résine acrylique thermoplastique (à base de méthacrylate de méthyle et d'acrylate d'éthyle, $T_v$ = 60°C, dureté TUKON = 15-16)

en solution dans le xylène

(concentration : 40 % en poids)                181

- dioxyde de titane                                                                 121
- cyclohexanone/acétone/diméthylformamide
  (respectivement en poids : 66/17/17)                                          24
    2°) Complément
- copolymère fluoré dont les caractéristiques sont données
  dans le Tableau I en solution dans 50/45/5
  (en poids) de méthyléthylcétone/xylène/éthoxypropanol
  (concentration : 25 % en poids)                                               674

Le rapport pondéral du polymère fluoré à l'ensemble des résines est égal à 70 %.
On prépare et applique l'enduit obtenu de la même façon que dans l'EXEMPLE 1.C.
Les résultats sont réunis dans le Tableau I.

EXEMPLE 3

On renouvelle l'essai de l'EXEMPLE 1 avec un enduit qui comprend (en grammes) :

    1°) Dispersion
- résine acrylique thermodurcissable (méthacrylate de méthyle,
  méthacrylate d'hydroxyéthyle, acide méthacrylique, acrylate
  de butyle 60/18/2/20 (en poids), $\overline{Mn}$ = 2800 et $\overline{Mw}$ = 10600)
  en solution dans la méthylisobutylcétone
  (concentration : 70 % en poids)                                              89
- dioxyde de titane                                                              131
- cyclohexanone/acétone/diméthylformamide
  (respectivement en poids : 66/17/17)                                          31
    2°) Complément
- copolymère fluoré dont les caractéristiques sont données
  dans le Tableau I en solution dans un mélange 2/1 (en poids)
  cyclohexanone/acétone
  (concentration : 25 % en poids)                                              731
- résine acrylique thermodurcissable (méthacrylate de méthyle,
  méthacrylate d'hydroxyéthyle, acide méthacrylique, acrylate
  de butyle 60/18/2/20 (en poids), $\overline{Mn}$ = 2800 et $\overline{Mw}$ = 10600)
  en solution dans la méthylisobutylcétone
  (concentration : 70 % en poids)                                              1
- résine mélamine formol en solution à 90 % dans l'isobutanol               17

Le rapport pondéral du copolymère fluoré à l'ensemble des résines est égal à 70 %.
On prépare et applique l'enduit obtenu dans l'EXEMPLE 1.C.
La plaque ainsi revêtue est étuvée pendant 30 minutes à 130°C.
On évalue l'enduit obtenu à l'aide des mêmes tests que ceux décrits dans l'EXEMPLE 1.C.
Les résultats sont réunis dans le Tableau I.

6

EXEMPLE 4

On renouvelle l'essai de l'EXEMPLE 1 avec un enduit qui comprend en grammes :

### 1°) Dispersion

- résine acrylique thermodurcissable (méthacrylate de méthyle, méthacrylate d'hydroxyéthyle, acide méthacrylique, acrylate de butyle 60/18/2/20 (en poids), $\overline{Mn}$ = 2800 et $\overline{Mw}$ = 10600) en solution dans la méthylisobutylcétone

(concentration : 70 % en poids)      103

- dioxyde de titane      152

- cyclohexanone/acétone/diméthylformamide

(respectivement en poids : 66/17/17)      37

### 2°) Complément

- copolymère fluoré en solution dans un mélange 2/1 (en poids) cyclohexanone/acétone

(concentration : 25 % en poids)      607

- composé d'isocyanate à base d'hexaméthylènediisocyanate      32

Les caractéristiques des copolymères fluorés utilisés sont indiquées dans le Tableau I (EXEMPLES 4.a à 4.1).

Le rapport pondéral du copolymère fluoré à l'ensemble des résines est égal à 50 %.

On prépare, applique et évalue l'enduit ainsi obtenu de la même façon que dans l'EXEMPLE 1.C.

Les résultats sont réunis dans le Tableau I.

EXEMPLE 5

On renouvelle l'essai de l'EXEMPLE 1.

L'enduit préparé selon 1.A et de composition identique à celle de l'EXEMPLE 1.d., est appliqué au pistolet pneumatique sur une plaque en bois de sapin puis séché à température ambiante pendant 15 jours.

L'épaisseur du film sec est de 25 μm.

On évalue l'enduit obtenu à l'aide des mêmes tests que ceux décrits à l'EXEMPLE 1.

Les résultats sont réunis dans le Tableau I.

EXEMPLE 6

On renouvelle l'essai de l'EXEMPLE 1.

L'enduit préparé selon 1.A. et de composition identique à celle de l'EXEMPLE 1.d. est appliqué au pistolet pneumatique sur une plaque de polybutylènetéréphtalate puis séché pendant 30 minutes à 80°C.

L'épaisseur du film sec est de 25 μm.

Après 24 heures on évalue l'enduit obtenu à l'aide des mêmes tests que ceux décrits à l'EXEMPLE 1.C.

Les résultats sont réunis dans le Tableau I.

EXEMPLE 7

On renouvelle l'essai de l'EXEMPLE 3.

L'enduit préparé a une composition identique à celle de l'EXEMPLE 3 et est appliqué au pistolet pneumatique sur une plaque d'acier doux préalablement dégraissée puis séché à l'étuve pendant 30 minutes à 130°C.

L'épaisseur du film sec est de 25 μm.

Après 24 heures on évalue l'enduit obtenu à l'aide des mêmes tests que ceux décrits à l'EXEMPLE 1.C.

Les résultats sont réunis dans le tableau I.

## TABLEAU I

| EXEMPLE N° | MONOMERES DU COPOLYMERE FLUORE (% MOLAIRES) | BRILLANT % | ADHERENCE % | DURETE |
|---|---|---|---|---|
| 1.a | $VF_2 / C_2F_4 / C_2F_3Cl$ <br> $74 / 17 / 9$ | 54 | 100 | H |
| 1.b | $VF_2 / C_2F_4 / C_2F_3Cl$ <br> $77 / 20 / 3$ | 59 | 100 | H |
| 1.c | $VF_2 / C_2F_4 / C_2F_3Cl$ <br> $72 / 23,5 / 4,5$ | 38 | 100 | H |
| 1.d | $VF_2 / C_2F_4 / C_2F_3Cl$ <br> $80 / 13 / 7$ | 79 | 100 | H |
| 1.e | $VF_2 / C_2F_4 / C_2F_3Cl$ <br> $85 / 10 / 5$ | 74 | 100 | H |
| 1.f COMPARATIF | $VF_2 / C_2F_4 / C_2F_3Cl$ <br> $73 / 15 / 12$ | 75 | 80 | B |
| 1.g COMPARATIF | $VF_2 / C_2F_4 / C_2F_3Cl$ <br> $68 / 21 / 11$ | 68 | 80 | 2B |
| 1.h COMPARATIF | $VF_2 / C_2F_4 / C_2F_3Cl$ <br> $79,5 / 10,5 / 10$ | 76 | 60 | B |
| 1.i COMPARATIF | $VF_2 / C_2F_4 / C_3F_6$ <br> $79 / 19 / 2$ | 18 | 60 | HB |
| 1.j COMPARATIF | $VF_2 / C_2F_4 / C_3F_6$ <br> $80 / 16 / 4$ | 80 | 80 | 2B |
| 1.k COMPARATIF | $VF_2 / C_2F_4$ <br> $85 / 15$ | 8 | 30 | B |
| 1.1 COMPARATIF | $VF_2 / C_2F_4$ <br> $80 / 20$ | 30 | 30 | HB |

| EXEMPLE N° | MONOMERES DU COPOLYMERE FLUORE % MOLAIRES | BRILLANT % | ADHERENCE % | DURETE |
|---|---|---|---|---|
| 2 | $VF_2$ / $C_2F_4$ / $C_2F_3Cl$  80 / 13 / 7 | 76 | 100 | F |
| 3 | $VF_2$ / $C_2F_4$ / $C_2F_3Cl$  80 / 13 / 7 | 77 | 100 | 3H |
| 4.a | $VF_2$ / $C_2F_4$ / $C_2F_3Cl$  74 / 17 / 9 | 77 | 100 | H |
| 4.b | $VF_2$ / $C_2F_4$ / $C_2F_3Cl$  77 / 20 / 3 | 63 | 100 | H |
| 4.c | $VF_2$ / $C_2F_4$ / $C_2F_3Cl$  72 / 23,5 / 4,5 | 66 | 100 | 3H |
| 4.d | $VF_2$ / $C_2F_4$ / $C_2F_3Cl$  80 / 13 / 7 | 80 | 100 | 2H |
| 4.e | $VF_2$ / $C_2F_4$ / $C_2F_3Cl$  85 / 10 / 5 | 86 | 100 | H |
| 4.f COMPARATIF | $VF_2$ / $C_2F_4$ / $C_2F_3Cl$  73 / 15 / 12 | 75 | 100 | B |
| 4.g COMPARATIF | $VF_2$ / $C_2F_4$ / $C_2F_3Cl$  68 / 21 / 11 | 68 | 100 | 2B |
| 4.h COMPARATIF | $VF_2$ / $C_2F_4$ / $C_2F_3Cl$  79,5/ 10,5 / 10 | 76 | 60 | B |
| 4.i COMPARATIF | $VF_2$ / $C_2F_4$ / $C_3F_6$  79 / 19 / 2 | 38 | 100 | F |
| 4.j COMPARATIF | $VF_2$ / $C_2F_4$ / $C_3F_6$  80 / 16 / 4 | 86 | 100 | B |

| EXEMPLE N° | MONOMERES DU COPOLYMERE FLUORE % MOLAIRES | BRILLANT % | ADHERENCE % | DURETE |
|---|---|---|---|---|
| 4.k COMPARATIF | $VF_2$ / $C_2F_4$<br>85 / 15 | 30 | 80 | HB |
| 4.1 COMPARATIF | $VF_2$ / $C_2F_4$<br>80 / 20 | 60 | 80 | HB |
| 5 | $VF_2$ / $C_2F_4$ / $C_2F_3Cl$<br>80 / 13 / 7 | 75 | 100 | H |
| 6 | $VF_2$ / $C_2F_4$ / $C_2F_3Cl$<br>80 / 13 / 7 | 73 | 100 | H |
| 7 | $VF_2$ / $C_2F_4$ / $C_2F_3Cl$<br>80 / 13 / 7 | 74 | 100 | 2H |

N.B : $VF_2$ est l'abréviation correspondant au fluorure de vinylidène.

| EXEMPLE N° | | | | VISCOSITE DYNAMIQUE (Pa.s) |
|---|---|---|---|---|
| 1.a | 4.a | | | 0,53 |
| 1.b | 4.b | | | 0,5 |
| 1.c | 4.c | | | 0,73 |
| 1.d | 4.d | 5 | 6 | 0,41 |
| 1.e | 4.e | | | 0,39 |
| 1.f | 4.f | | | 0,584 |
| 1.g | 4.g | | | 0,874 |
| 1.h | 4.h | | | 0,192 |
| 1.i | 4.i | | | 0,25 |
| 1.j | 4.j | | | 0,354 |
| 1.k | 4.k | | | 160 |
| 1.l | 4.l | | | 9 |
| 2 | | | | 0,41 |
| 3 | | | | 0,41 |

## Revendications

1. Composition pour revêtement ou enduit de surfaces à base d'un ou plusieurs terpolymères fluorés et de résine(s) acryliques caractérisée en ce que le ou les terpolymères fluorés sont constitués en moles de :
   - 70 à 85% de motifs dérivés de fluorure de vinylidène,
   - 10 à 25 % de motifs dérivés de tétrafluoroéthylène,
   - 3 à 9 % de motifs dérivés de trifluorochloroéthylène.

2. Composition selon la revendication 1, caractérisée en ce que la viscosité dynamique du ou des terpolymères fluorés mesurée à 24°C dans un mélange 2/1 en poids cyclohexanone/acétone est inférieure ou égale à 1 Pa.s.

3. Composition selon la revendication 1 ou 2 caractérisée en ce qu'elle contient :
   - une ou plusieurs résines durcisseuses
   - et/ou un ou plusieurs solvants
   - et/ou des pigments ou colorants
   - et/ou des additifs divers tels que charges, agents mouillants, anti-oxydants, fongicides, agents anti-sédimentation, agents épaississants...

4. Composition selon l'une quelconque des revendications 1 à 3, caractérisée en ce que le rapport pondéral du ou des terpolymères fluorés à la somme de toutes les résines est compris entre 30 et 90 %, et de préférence entre 50 et 70 %.

5. Substrats revêtus d'un revêtement ou enduit dont la composition est telle que définie dans l'une quelconque des revendications 1 à 4.


**Patentansprüche**

1. Zusammensetzung zur Oberflächenbeschichtung und-auskleidung auf der Basis von einem oder mehreren fluorierten Terpolymeren und Acrylharz(en), dadurch gekennzeichnet, daß das oder die fluorierten Terpolymere aus folgenden Molverhältnissen bestehen:
   - 70 bis 85 % Vinylidenfluorid-Einheiten
   - 10 bis 25 % Tetrafluorethylen-Einheiten
   - 3 bis 9 % Trifluorchlorethylen-Einheiten

2. Zusammensetzung nach Anspruch 1, dadurch gekennzeichnet, daß die bei 24°C in einer Mischung von 2:1 Gewichtsteilen Cyclohexanon/Aceton gemessene dynamische Viskosität des oder der fluorierten Terpolymere kleiner oder gleich 1 Pa.s ist.

3. Zusammensetzung nach einem der Ansprüche 1 oder 2, dadurch gekennzeichnet, daß sie enthält:
   - ein oder mehrere härtbare Harze - und/oder ein oder mehrere Lösungsmittel
   - und/oder Pigmente oder Farbstoffe
   - und/oder verschiedene Additive, wie Füllstoffe, Benetzungsmittel, Antioxidantien, Fungizide, Antisedimentationsmittel, Verdickungsmittel, usw.

4. Zusammensetzung nach einem der Ansprüche 1 bis 3, dadurch gekennzeichnet, daß das Gewichtsverhältnis des oder der fluorierten Terpolymere zur Summe aller Harze zwischen 30 und 90 %, vorzugsweise 50 bis 70 %, beträgt.

5. Beschichtete oder ummantelte Substrate, deren Beschichtungszusammensetzung nach einem der Ansprüche 1 bis 4 definiert ist.


**Claims**

1. A composition for a surface covering or coating on a base of one or more fluorinated terpolymers and acrylic resin(s),
   **characterised in that** the fluorinated terpolymer(s) is/are made up in moles of :
   - 70 to 85 % of structural units derived from vinylidene fluoride,
   - 10 to 20 % of structural units derived from tetrafluoroethylene,
   - 3 to 9 % of structural units derived from trifluorochloroethylene.

2. A composition according to Claim 1,
   **characterised in that** the dynamic viscosity of the fluorinated terpolymer(s) measured at 24 °C in a 2/1 mixture by weight of cyclohexanone/acetone is less than or equal to 1 Pa.s.

3. A composition according to Claim 1 or 2, **characterised in that** it contains:
   - one or more hardening resin
   - and/or one or more solvent
   - and/or pigments or colourings
   - and/or various additives such as extenders, wetting agents, antioxidants, fungicides, anti-sedimentation agents, thickening agents, etc.

4. A composition according to any one of Claims 1 to 3, **characterised in that** the weight ratio of the fluorinated terpolymer(s) to the total of all the resins is between 30 and 90 %, and preferably between 50 and 70 %.

5. Substrates covered with a covering or coating, the composition of which is such as defined in any one of Claims 1 to 4.